# EUROPÄISCHE PATENTSCHRIFT

(11) **EP 2 667 102 B1**
(45) Veröffentlichungstag und Bekanntmachung des Hinweises auf die Patenterteilung: **24.12.2014**
(21) Anmeldenummer: 12004010.0
(22) Anmeldetag: 23.05.2012
(51) Int. Cl.: F24D 3/16, F24D 3/14, E04C 2/52, E04C 2/04, E04C 2/32

(54) **Verbundbauelement für eine Fußboden-, Wand- oder Deckenklimatisierungsvorrichtung eines Gebäudes**
Composite construction element for a floor, wall or ceiling air conditioning device of a building
élément de construction mixte pour un dispositif de climatisation au plafond, au mur ou au sol d'un bâtiment

(43) Veröffentlichungstag der Anmeldung: 27.11.2013
(73) Patentinhaber: INCOTEC Gmbh & Co. KG, 90518 Altdorf (DE)
(72) Erfinder: Meier, Willibald, 90559 Burgthann (DE)
(74) Vertreter: Wiedemann, Markus

(56) Entgegenhaltungen:
- EP-A2- 1 512 933
- DE-A1-102008 019 888

## Beschreibung

Die Erfindung betrifft ein Verbundbauelement für eine Fußboden-, Wand- oder Deckenklimatisierungsvorrichtung eines Gebäudes gemäß Anspruch 1.

Aus DE 10 2005 029 051 A1 ist eine Wärmeleitvorrichtung bekannt, dort als Bestandteil einer Fußbodenheizung. Dabei sind die Rohre in Nuten einer nicht Graphitexpandat beinhaltenden Platte vollständig aufgenommen und in den Nuten von einer Graphitexpandat enthaltenden Folie teilweise ummantelt. Weiterhin ist eine weitere Graphitexpandat enthaltende Folie zwischen der Trägerplatte und einer Estrichplatte angeordnet. Mit Hilfe der beiden Folien aus Graphitexpandat enthaltenden Folie soll ein verbesserter Wärmeübergang zwischen den von einem flüssigen Wärmeträger durchflossenen Rohren und einer Estrichplatte hergestellt werden. Jedoch ist das Volumen der beiden Folien aus Graphitexpandat relativ' klein, so dass die Wärmeleitung und der Wärmeübergang auf die Estrichplatte relativ gering sind. Weiterhin sind auch zwischen den Rohren und den Nuten Lücken bzw. Hohlräume vorhanden, welche durch die eine der beiden Folien nicht vollständig ausgefüllt werden, was ebenfalls einen ungünstigen Wärmeübergang bedingt.

Weiterhin ist aus DE 100 22 972 A1 ein Wärmetauscher bekannt, bei dem eine Hohlfaserstruktur mit Röhren zwischen zwei Folien aus Graphitexpandat eingepresst wird. Nachteilig dabei ist, dass dann die Folien aus Graphitexpandat wegen ihrer plastischen Verformung zu Rissbildung neigen. Weiterhin gestaltet sich die Ausbildung einer ebenen Oberfläche des Wärmetauschers schwierig, weil es aufgrund des Pressvorgangs zu Materialverschiebungen bei den Folien kommt, welche sich auf der Oberfläche des Wärmetauschers als Unebenheiten abbilden. Wegen dieser oberflächlichen Unebenheiten ist eine Befestigung einer Dekorplatte am Wärmetauscher schwierig und damit auch der Wärmeübergang vom Wärmetauscher auf die Dekorplatte ungenügend, so dass er als Verbundbauelement für eine Fußboden-, Wand- oder Deckenklimatisierungsvorrichtung eines Gebäudes ungeeignet erscheint.

Falls die Rohre direkt in expandierten Graphit eingespritzt werden, so hat spritzfähiger expandierter Graphit keine sehr hohe Dichte, so dass Wärmeleitfähigkeit und Wärmeübergang ungenügend sind.

Das Dokument DE 102008019888 offenbart ein bekanntes Verbundbauelement, und den nächstliegenden Stand der Technik gegenüber Anspruch 1.

Der Erfindung liegt demgegenüber die Aufgabe zugrunde, ein Verbundbauelement der oben erwähnten Art derart fortzubilden, dass die oben beschriebenen Nachteile vermieden werden.

Diese Aufgabe wird erfindungsgemäß durch die Merkmale von Anspruch 1 gelöst.

### Offenbarung der Erfindung

Gemäß Anspruch 1 wird ein Verbundelement vorgeschlagen, beinhaltend wenigstens ein zum Durchfluss eines flüssigen Wärmeträgers vorgesehenes Rohr, wenigstens eine Platte, die aus einem oder mehreren nicht Grahitexpandat enthaltenden Materialien besteht, mit wenigstens einer Nut, in welcher wenigstens ein Teil des Querschnitts des wenigstens einen Rohrs (2) aufgenommen ist, eine wärmeleitende, Graphitexpandat beinhaltende Schicht, welche wenigstens einen Teil der Rohroberfläche des Rohrs kontaktiert, der Nutoberfläche der Nut und der Rohroberfläche des Rohrs zwischengeordnet ist, und, senkrecht zur Längserstreckung des Rohrs gesehen, mit wenigstens einem Kontaktabschnitt aus der Nut der Platte herausragt, wobei das Rohr mit dem einen Teil seines Querschnitts in der Nut der Platte und mit einem weiteren Teil seines Querschnitts in einer weiteren Nut wenigstens einer Grahitexpandat enthaltenden Wärmeleitplatte aufgenommen ist, und wobei die wenigstens eine Wärmeleitplatte mit der wenigstens einen Platte verbunden ist, und der wenigstens eine Kontaktabschnitt der Graphitexpandat beinhaltenden, wärmeleitenden Schicht die wenigstens eine Wärmeleitplatte kontaktiert.

Damit findet ein Wärmeübergang vom flüssigen Wärmeträger auf das Rohr und von der Rohroberfläche auf die Graphitexpandat beinhaltende, wärmeleitende Schicht und von dort auf die Wärmeleitplatte statt. Von der Wärmeleitplatte kann dann entweder direkt oder über eine z.B. aus optischen Gründen anzubringende Dekormittel wie beispielsweise eine Dekorplatte ein Wärmeübergang in den zu temperierenden Raum erfolgen.

Weil zum einen das Rohr mit einem Teil seines Querschnitts in der Nut der Platte und mit einem weiteren Teil seines Querschnitts in der weiteren Nut der wenigstens einen Grahitexpandat enthaltenden Wärmeleitplatte aufgenommen ist, ist das Rohr lückenlos bzw. ohne Ausbildung von Hohlräumen zwischen der Platte und der wenigstens einen Wärmeleitplatte aufgenommen bzw. gehalten, womit die diesbezüglichen Nachteile der DE 10 2005 029 051 A1 hinsichtlich des Vorhandenseins von Hohlräumen und des dadurch verschlechterten Wärmeübergangs vermieden werden.

Weil die wenigstens eine Wärmeleitplatte mit der wenigstens einen Platte verbunden ist, beispielsweise stoffschlüssig durch Klebung, kann das Verbundbauelement bei geeigneter Ausbildung der Platte als Trägerplatte hinsichtlich Material, Abmessungen und Geometrie eigensteif und selbsttragend ausgeführt werden, was einen zusätzlichen Trägerrahmen entbehrlich macht, mit welchem das Verbundbauelement beispielsweise an einer Wand oder Decke befestigt wird. Vielmehr kann dann das Verbundbauelement als Einheit direkt an einer Wand oder einer Decke befestigt werden, wobei dann die Wärmeleitplatte in den zu klimatisierenden Raum des Gebäudes weist. Dadurch kann auch das Gewicht des Verbundbauelements vorteilhaft gering ausfallen. Demgegenüber kann die Wärmeleitplatte dann hauptsächlich nach dem Gesichtspunkt einer optimalen Wärmeleitung bzw. eines optimalen Wärmeübergangs konzipiert werden und braucht, durch die steife Platte bzw. Trägerplatte gestützt und getragen, keine hohen Anforderungen an ihre Eigensteifigkeit erfüllen.

Nicht zuletzt sorgt die Graphitexpandat enthaltende wärmeleitende Schicht bzw. deren Anordnung zwischen der Nutoberfläche der Nut in der Platte und der Rohroberfläche dafür, dass das Rohr vollständig von Graphitexpandat ummantelt wird, insbesondere im Bereich seines in der Nut der Platte gehaltenen Teils seines Querschnitts, damit der in der Nut der Platte angeordnete Rohrbogen bzw. Teil des Querschnitts des Rohrs die Wärme von der Rohroberfläche in die wärmeleitende Schicht, von dort in den Kontaktabschnitt und von diesem in die den Kontaktabschnitt kontaktierende Wärmeleitplatte ableiten kann. Dadurch wird die Wärmeleitung bzw. der Wärmeübergang vom Rohr in die Wärmeleitplatte wesentlich verbessert.

Das Verbundbauelement ist dann bevorzugt plattenförmig, wobei mehrere solcher Verbundbauelemente jeweils als Baueinheit in Serien- und/oder Parallelschaltung miteinander kombiniert werden können, um einen Raum ausreichend zu klimatisieren. In diesem Fall ragen die Rohrenden aus den Verbundbauelementen ein Stück weit heraus, um sie mit Hilfe von fittings, Rohrbögen oder flexiblen Schläuchen an Rohrenden benachbarter Verbundbauelemente anschließen zu können.

Dem Fachmann ist klar, dass anstatt eines auch mehrere, gegenläufig oder gleichläufig von dem flüssigen Wärmeträger durchflossene Rohre in einem solchen Verbundbauelement angeordnet sein können.

Durch die in den Unteransprüchen aufgeführten Maßnahmen sind vorteilhafte Weiterbildungen und Verbesserungen der in Anspruch 1 angegebenen Erfindung möglich.

Besonders bevorzugt weisen die Nut in der Platte und die weitere Nut in der Wärmeleitplatte jeweils einen im Wesentlichen halbkreisförmigen Querschnitt aufweisen. Solche halbkreisförmigen Querschnitte sind in der Regel einfach herzustellen. Alternativ kann der Querschnitt der einen Nut zugunsten des Querschnitts der anderen Nut auch etwas kleiner ausfallen. Wesentlich ist, dass das wenigstens eine Rohr in den Nuten im Querschnitt gesehen im Wesentlichen lückenlos aufgenommen ist.

Besonders bevorzugt besteht die wärmeleitende Schicht aus Graphitexpandat oder weist wenigstens eine Graphitexpandat enthaltende Folie auf, welche dann aufgrund ihrer elastischen Eigenschaften auf einfache Weise in die Nut in der Trägerplatte eingelegt bzw. eingeformt werden kann, unter gleichzeitiger Ausbildung des wenigstens einen Kontaktabschnitts.

Gemäß einer Weiterbildung kann das Graphitexpandat der Folie eine höhere Dichte aufweisen als das Graphitexpandat der Wärmeleitplatte. Damit wird die geringere Materialvolumen der wärmeleitenden Schicht gegenüber der Wärmeleitplatte durch die höhere Dichte und damit das höhere Wärmeleitvermögen kompensiert.

Besonders bevorzugt ist die Wärmeleitplatte mit der Platte unter Zwischenordnung des wenigstens einen Kontaktabschnitts der wärmeleitenden Schicht stoffschlüssig verbunden, insbesondere durch Verkleben der Wärmeleitplatte mit der Platte. Dadurch wird gleichzeitig das wenigstens eine Rohr zwischen der Platte und der Wärmeleitplatte fixiert.

Gemäß einer Weiterbildung weisen die Nut in der Platte und die weitere Nut in der Wärmeleitplatte derartige Dimensionen auf, dass das wenigstens eine Rohr mit seiner Rohroberfläche einerseits die wärmeleitende Schicht und andererseits die Nutoberfläche der weiteren Nut kontaktiert, insbesondere derart, dass sich jeweils ein Kraftschluss einerseits zwischen dem Rohr und der weiteren Nut und andererseits zwischen dem Rohr, der wärmeleitenden Schicht und der Nut in der Platte ausbilden kann. Eine kraftschlüssige Fixierung des Rohrs in den Nuten, gegebenenfalls unter geringfügiger elastischer Materialverformung bedingt einen festen Kontakt zwischen Rohr und Wärmeleitplatte bzw. zwischen Rohr und wärmeleitender Schicht, so dass auch der diesbezügliche Wärmeübergang sehr gut ist. Weiterhin kann es dadurch zu keiner Verlagerung des Rohrs in Bezug zu dem Verbundbauelement kommen und das Rohr ist in dem Verbundbauelement gut fixiert, was insbesondere im Hinblick auf eine nicht auszuschließende Schwingungsanregung des Rohrs durch den das Rohr durchfließenden, flüssigen Wärmeträger von Vorteil ist.

Die Platte kann eine Platte in Sandwichbauweise beinhalten, beispielsweise eine Gipskartonplatte oder eine Platte mit einer Innenschicht aus geschäumten Kunststoff wie Polystyrol oder Polyurethan und wenigstens einer Außenschicht aus Kartonage oder Folie. Dies bringt im Hinblick auf die Herstellung des Verbundbauelements besondere Vorteile, worauf später noch eingegangen wird.

Besonders bevorzugt umgreift die Platte die Wärmeleitplatte an deren Seitenflächen, wobei die Platte einen U-förmigen Querschnitt mit Schenkeln aufweist, wobei die Schenkel die Seitenflächen der Wärmeleitplatte kontaktieren. Dadurch ergibt sich eine besonders steife Konstruktion, weil die aus wenig steifem Graphitexpandat bestehende Wärmeleitplatte dann von der Platte an drei Seiten umgriffen wird. Weiterhin ist dann das Verbundbauelement besonderes einfach herstellbar, worauf später noch eingegangen wird.

Gemäß einer Weiterbildung kann die von der Platte weg weisende Außenfläche der Wärmeleitplatte mit wenigstens einem diese Außenfläche kontaktierenden Dekormittel wie einer Dekorplatte versehen sein. Solche Dekormittel können anstatt einer Dekorplatte oder zusätzlich einen Anstrich, Spachtel-, Putz-, Mörtel-, Beton- oder Estrichmasse beinhalten. Ebenso können die Wärmeleitplatte direkt oder die Dekormittel auch mit Strukturelementen wie Vertiefungen, Narbungen, Nuten oder Sicken versehen sein.

Die Enden der Schenkel sind bevorzugt gegenüber der von der Platte weg weisenden Außenfläche der Wärmeleitplatte ein Stück weit zurück versetzt sein. In diesem Fall ist sichergestellt, dass die gesamte zur Wärmeleitplatte weisende Fläche eines Dekormittels wie etwa einer Dekorplatte an der Wärmeleitplatte eben befestigt werden kann, ohne dass etwa die Schenkel der Platte so weit vorstehen, dass eine solche ebene Befestigung verhindert wird. Im Hinblick auf die noch zu erläuternde Herstellung der Platte als U-Profil hat dies vor allem hinsichtlich der einzuhaltenden Toleranzen der Schenkel Vorteile, weil die Schenkellänge dann etwas variieren kann

Besonders bevorzugt weist die Platte eine höhere Material- und/oder Formsteifigkeit auf als die Wärmeleitplatte. Unter 'Materialsteifigkeit' ist dabei die aus dem Material und unter "Formsteifigkeit' die aus der Geometrie herrührende Steifigkeit zu verstehen. Dann kann die Wärmeleitplatte hauptsächlich hinsichtlich ihrer Wärmeübergangs- und Wärmeleiteigenschaften konzipiert werden und insbesondere auch das Graphitexpandat eine geringe Dichte aufweisen, ohne dass die Steifigkeit des Verbundbauelements dabei zu gering wird.

Insbesondere stellt dann die Platte eine Trägerplatte für die Wärmeleitplatte dar und die wenigstens eine Wärmeleitplatte ist mit wenigstens seiner Trägerplatte zu einem eigensteifen und selbsttragenden Verbundbauelement stoffschlüssig verbunden, was etwa einen zusätzlichen Rahmen zur Befestigung an einer Decke oder einer Wand entbehrlich macht. Gemäß einer Weiterbildung kann dann das Verbundbauelement, bevorzugt an der Platte, Verbindungsmittel zur direkten oder indirekten Befestigung an einem Fußboden, einer Wand oder einer Decke eines Gebäudes aufweisen.

Die Erfindung betrifft auch eine Fußboden-, Wand- oder Deckenklimatisierungsvorrichtung für ein Gebäude, welche wenigstens ein oben beschriebenes Verbundelement beinhaltet, zum Heizen oder Kühlen eines Raumes.

Die genaue Funktionsweise des erfindungsgemäßen Verbundelements wird durch die folgende Beschreibung eines Ausführungsbeispiels deutlich.

### Zeichnung

In der Zeichnung zeigt
- Fig.1: eine nicht maßstäbliche Querschnittsdarstellung einer bevorzugten Ausführungsform eines Verbundbauelements gemäß der Erfindung;
- Fig.2: eine nicht maßstäbliche Querschnittsdarstellung einer Trägerplatte des Verbundbauelements von Fig.1 bei seiner Herstellung.

### Beschreibung des Ausführungsbeispiels

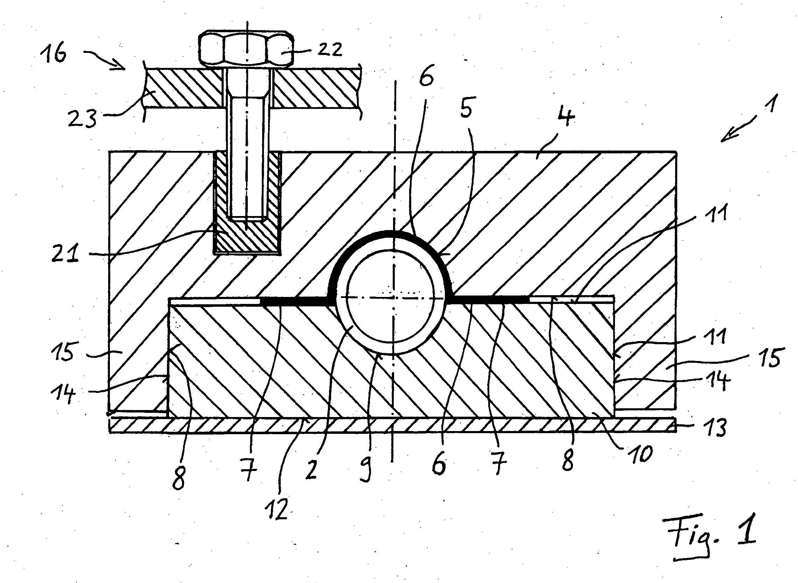

Ein in Fig.1 im Querschnitt aus Anschauungsgründen nicht maßstäblich gezeigtes Verbundbauelement 1 für eine Fußboden-, Wand- oder Deckenklimatisierungsvorrichtung eines Gebäudes ist bevorzugt plattenförmig ausgeführt und in eine Reihe weiterer Verbundbauelemente in Serien- oder Parallelschaltung geschaltet, jeweils bezogen auf den Durchfluss eines flüssigen Wärmeträgers.

Das Verbundbauelement 1 weist bevorzugt einen rechteckförmigen Querschnitt auf und ist auch senkrecht zur Plattenebene gesehen ebenfalls bevorzugt rechteckförmig. Das Verbundbauelement 1 beinhaltet wenigstens ein zum Durchfluss eines flüssigen Wärmeträgers vorgesehenes Rohr 2, welches sich beispielsweise parallel zu den äußeren Seitenflächen des Verbundbauelements 1 erstreckt und in Bezug zu diesen beispielsweise zentrisch angeordnet ist. Anstatt eines Rohres 2 können selbstverständlich auch mehrere Rohre im Inneren des Verbundbauelements 1 angeordnet oder eingebettet sein, beispielsweise parallel zueinander und gleichläufig oder gegenläufig durchflossen. Alternativ können auch ein oder mehrere Rohre 2 mäanderförmig im Inneren des Verbundbauelements 1 angeordnet sein. Gemeinsam ist allen möglichen Ausführungsformen, dass die Enden des Rohres 2 oder der Rohre jeweils eine Anschlussmöglichkeit als Zulauf oder Rücklauf für einen flüssigen Wärmeträger aufweisen, von dem sie durchflossen werden.

Das Verbundbauelement 1 beinhaltet weiterhin wenigstens eine Trägerplatte 4, die aus einem nicht Grahitexpandat enthaltenden Material besteht. Besonders bevorzugt wird die Trägerplatte 4 aus einer Platte aus Gipskarton gebildet, mit oder ohne Faserverstärkung. Die Trägerplatte 4 weist eine Nut 5 auf, in welcher das Rohr 2 wenigstens teilweise aufgenommen ist. Der Querschnitt der Nut 5 in der Trägerplatte 4 ist bevorzugt im Wesentlichen halbkreisförmig, wobei der Durchmesser des den Halbkreisquerschnitt bildenden Halbkreises etwas größer als der Außendurchmesser des Rohres 2 ist, weil der Rohraußenfläche des Rohres 2 und der Nutoberfläche der Nut 5 in der Trägerplatte 4 noch eine wärmeleitende, Graphitexpandat enthaltende Schicht 6 zwischengeordnet ist. Diese wärmeleitende Schicht 6 besteht bevorzugt aus Graphitexpandat, insbesondere aus einer Folie aus Graphitexpandat, welche in die Nut 5 der Trägerplatte 4 eingelegt und derart zugeschnitten ist, dass ihr Rand als Kontaktabschnitt 7 beidseitig über den Rand der Nut 5 hinausragt, um an der ebenen Kontaktfläche 8 der Trägerplatte 4 kontaktierend anzuliegen. Senkrecht zur Längserstreckung des Rohres 2 gesehen ragt daher die Folie 6 aus Graphitexpandat mit ihrem Kontaktabschnitt 7 aus der Nut 5 der Trägerplatte 4 bevorzugt nur ein Stück weit heraus. Die Folie 6 aus Graphitexpandat umschlingt dadurch im Querschnitt gesehen den in der Nut 5 der Trägerplatte 4 angeordneten etwa halbkreisförmigen Rohrbogen des Rohrs 2 an dessen Rohraußenfläche.

Wie aus Fig.1 hervorgeht, ist das Rohr 2 mit einem Teil in der Nut 5 der Trägerplatte 4 und mit einem weiteren Teil in einer weiteren Nut 9 einer bevorzugt komplett aus Grahitexpandat bestehenden Wärmeleitplatte 10 aufgenommen. Besonders bevorzugt weisen die Nut 5 in der Trägerplatte 4 und die weitere Nut 9 in der Wärmeleitplatte 10 jeweils einen im Wesentlichen halbkreisförmigen Querschnitt auf, um jeweils einen etwa halbkreisförmigen Rohrbogen des Rohrs 2 aufzunehmen. Alternativ kann der Querschnitt der Nut 5 in der Trägerplatte 4 zugunsten des Querschnitts der weiteren Nut 9 in der Wärmeleitplatte 10 auch etwas kleiner ausfallen oder umgekehrt. Wesentlich ist, dass das Rohr 2 in den Nuten 5, 9 im Querschnitt gesehen im Wesentlichen lückenlos aufgenommen ist.

Die Wärmeleitplatte 10 ist mit ihrer Kontaktfläche 11 mit der Kontaktfläche 8 der Trägerplatte 4 beispielsweise stoffschlüssig, insbesondere durch Verklebung an dem Abschnitt direkt verbunden, an welchen kein Kontaktabschnitt 7 der Folie 6 aus Graphitexpandat vorhanden ist. Dabei wird der geringfügige Abstand der Kontaktflächen 8, 11, welcher sich durch den Kontaktabschnitt 7 der dünnen Folie 6 ergibt, bevorzugt mit Klebemittel verfüllt, so dass es in jedem Fall auch in diesem Abschnitt zur einer direkten Verklebung der Kontaktflächen 8, 11 kommt. An dem Abschnitt der Kontaktflächen 8, 11, an denen der Kontaktabschnitt 7 der Folie 6 aus Graphitexpandat zwischengeordnet ist, ist jeweils dieser Kontaktabschnitt 7 mit den Kontaktflächen 8, 11 verklebt, wodurch die Kontaktflächen 8, 11 miteinander indirekt stoffschlüssig verbunden sind.

Anstatt sich mit ihrem Kontaktabschnitt 7 nur ein Stück weit über den Rand der Nut 5 der Trägerplatte 4 seitlich hinaus zu erstrecken, kann sich die Folie 6 aus Graphitexpandat auch weiter, insbesondere über die gesamte Kontaktfläche 8 der Trägerplatte 4 mit der Kontaktfläche 11 der Wärmeleitplatte 10 erstrecken, oder eben nur über einen Teil von dieser.

Die Herstellung von expaniertem Graphit oder Graphitexpandat ist beispielsweise aus US-A 3 404 061 bekannt. Für die Herstellung von expandiertem Graphit werden Graphiteinlagerungsverbindungen bzw. Graphitsalze, z. B. Graphithydrogensulfat oder Graphitnitrat, schockartig erhitzt. Dabei vergrößert sich das Volumen der Graphitpartikel um den Faktor 200 bis 400 und die Schüttdichte sinkt auf 2 bis 20 g/l. Das so erhaltene sog. Graphitexpandat besteht aus wurm- oder ziehharmonikaförmigen Aggregaten. Wird der vollständig expandierte Graphit unter gerichteter Einwirkung eines Druckes kompaktiert, so ordnen sich die Schichtebenen des Graphits bevorzugt senkrecht zur Einwirkungsrichtung des Druckes an, wobei sich die einzelnen Aggregate untereinander verhaken. Dadurch lassen sich ohne Binderzusatz selbsttragende flächige Gebilde, z. B. Bahnen oder für den vorliegenden Einsatzzweck Wärmeleitplatten und Folien aus Graphitexpandat herstellen.

Aufgrund der gerichteten Einwirkung des Drucks während der Kompaktierung des Graphitexpandats weist eine Folie aus Graphitexpandat eine strukturelle Anisotropie auf. Wegen der Vorzugsorientierung der Graphitschichtebenen parallel zur Wärmeleitplatten- bzw. Folienfläche ist in der Wärmeleitplatte 10 bzw. Folie 6 aus Graphitexpandat die Wärmeleitung parallel zur flächigen Ausdehnung bevorzugt gegenüber der Wärmeleitung senkrecht zur Wärmeleitplatten- bzw. Folienfläche. Die Wärmeleitfähigkeit der Wärmeleitplatte 10 bzw. Folie 6 aus Graphitexpandat beträgt in der Richtung parallel zur Folienfläche ungefähr 150 W/m*K und in der Richtung senkrecht zur Plattenfläche 5 W/m*K. Die Wärmeleitfähigkeit parallel zur Wärmeleitplatten- bzw. Folienfläche ist also ca. dreißig mal größer als senkrecht zur Fläche. Das Verhältnis der Wärmeleitfähigkeit parallel zur Wärmeleitplatten- bzw. Folienfläche zur Wärmeleitfähigkeit senkrecht zur Wärmeleitplatten- bzw. Folienfläche ist um so größer, je stärker die Verdichtung des expandierten Graphits, also je größer die Dichte des expandierten Graphits.

Bei der bekannten Verfahrensweise zur Herstellung von Platten bzw. Folien aus Graphitexpandat werden die expandierten Graphitpartikel über einen Vorverdichter und Walzenpaare, in der Regel zwei Walzenpaare geführt, wobei das Expandat dem Vorverdichter kontinuierlich zugeführt wird. Zwischen den Walzenpaaren sind Aufheizzonen angeordnet, in denen das Material erhitzt wird. Die Temperaturen in diesen Aufheizbereichen liegen bei ca. 600 ° C und dienen dazu, die Luft aus dem dichter werdenden Material zu verdrängen. Sowohl im Vorverdichter als auch in den Walzenpaaren erfährt das Graphitexpandat eine gerichtete Einwirkung von Druck, der eine parallele Orientierung der Schichtebenen in den Graphitpartikeln bewirkt. Mit diesem Verfahren ist es möglich, sehr dünne Folien aus Graphitexpandat zu erhalten. Das Graphitexpandat der Folie 6 kann eine höhere Dichte aufweisen als das Graphitexpandat der Wärmeleitplatte 10.

Mit dem beschriebenen Aufbau des Verbundbauelements 1 findet ein Wärmeübergang vom flüssigen Wärmeträger auf das Rohr 2 und von der Rohraußenfläche auf die Folie 6 aus Graphitexpandat und von dort über den Kontaktabschnitt 7 auf die Kontaktfläche 11 der Wärmeleitplatte 10 und damit auf die Wärmeleitplatte 10 statt. Dieser Wärmeübergang wird durch die teilweise Umschlingung des Rohres 2 durch die Folie 6 aus Graphitexpandat begünstigt. Parallel hierzu kann ein Wärmeübergang von der Rohraußenfläche auf die Wärmeleitplatte 10 durch deren direkten Kontakt mit der Nutoberfläche der Nut 9 in der Wärmeleitplatte 10 erfolgen.

Von der Wärmeleitplatte 10 findet dann entweder direkt oder über eine aus optischen Gründen anzubringende Verkleidung wie beispielsweise eine an einer Außenfläche 12 der Wärmeleitplatte 10 direkt angebrachte Dekorplatte 13 ein Wärmeübergang in den zu temperierenden Raum des Gebäudes statt.

Die Nut 5 in der Trägerplatte 4 und die weitere Nut 9 in der Wärmeleitplatte 10 weisen bevorzugt derartige Dimensionen auf, dass das Rohr 2 mit seiner Rohraußenfläche einerseits die Folie 6 aus Graphitexpandat und diese Folie 6 die Oberfläche der Nut 5 in der Trägerplatte und andererseits die Oberfläche der weiteren Nut 9 in der Wärmeleitplatte 10 unter leichter oder großer Pressung kontaktiert, insbesondere derart, dass sich jeweils ein Kraftschluss zwischen dem Rohr 2 und der weiteren Nut 9 der Wärmeleitplatte 10 einerseits sowie dem Rohr 2, der Folie 6 und der Nut 5 in der Trägerplatte 4 andererseits ausbilden kann.

Besonders bevorzugt umgreift die Trägerplatte 4 die Wärmeleitplatte 10 an deren Seitenflächen 14, wobei die Trägerplatte 4 einen U-förmigen Querschnitt mit Schenkeln 15 aufweist, welche die Seitenflächen 14 der Wärmeleitplatte 10 kontaktieren. Dabei kann sich der Kontaktabschnitt 7 der Folie 6 aus Graphitexpandat bis hin zu den Enden der Seitenflächen 14 der Wärmeleitplatte 10 bzw. bis zu den Enden der Schenkel 15 der Trägerplatte 4 erstrecken, so dass in diesem Fall den Seitenflächen 14 der Wärmeleitplatte 10 und den Innenflächen der Schenkel 15 der Trägerplatte 4 der Kontaktabschnitt 7 der Folie 6 aus Graphitexpandat zwischengeordnet ist. In diesem Fall erstreckt sich daher der Kontaktabschnitt 7 von den Rändern der Nut 5 der Trägerplatte 4 um die am Beginn der Schenkel 15 ausgebildeten Ecken herum. Bevorzugt sind dabei auch die Innenflächen der Schenkel 15 der Trägerplatte 4, welche ebenfalls Bestandteil der Kontaktfläche 8 sind, mit der dort anliegenden Folie 6 aus Graphitexpandat und diese mit der Kontaktfläche 11 der Wärmeleitplatte 10 verklebt, wobei diese Kontaktfläche 11 dann auch die Seitenflächen 14 der Wärmeleitplatte 10 umfasst.

Wie bereits oben ausgeführt, ist die von der Trägerplatte 4 weg weisende Außenfläche 12 der Wärmeleitplatte 10 bevorzugt mit einer diese Außenfläche 12 kontaktierenden Dekorplatte 13 versehen. Dabei sind die Enden der Schenkel 15 der Trägerplatte 4 gegenüber der von der Trägerplatte 10 weg weisenden Außenfläche 12 der Wärmeleitplatte 10 ein Stück weit zurück versetzt. Dadurch können größere Toleranzen bei der Fertigung der Trägerplatte 4 zugelassen werden, um zu gewährleisten, dass wegen eines guten Wärmeübergangs die Dekorplatte 13 die Außenfläche 12 der Wärmeleitplatte 10 eben und komplett kontaktieren kann. Um eine gute Steifigkeit des Verbundbauelements 1 zu gewährleisten, weist die Trägerplatte 4 bevorzugt eine höhere Materialsteifigkeit und/oder Formsteifigkeit als die Wärmeleitplatte 10 auf.

Das Verbundbauelement 1 kann bevorzugt an der Trägerplatte 4 angreifende Verbindungsmittel 16 wie Schrauben, Stifte, Winkeleisen, Haken, Anker oder andere Verbindungsmittel 16 zur direkten oder indirekten Befestigung des Verbundbauelements 1 an einem Fußboden, einer Wand oder einer Decke eines Gebäudes bzw. Aufnahmen für solche Verbindungsmittel 16 aufweisen. Wesentlich ist, dass keine weiteren Maßnahmen zur Versteifung des Verbundbauelements 1 vorgenommen werden, sondern dass dieses als per se eigensteife oder selbsttragende Struktur an der Wand oder Decke befestigbar ist.

Im Ausführungsbeispiel sind in der Trägerplatte 4 beispielsweise metallene Gewindeeinsätze 21 für die Schäfte von Schrauben 22 aufgenommen, welche mit ihrem Schraubenkopf an einer beispielsweise mit einer Raumdecke verbundenen Befestigungsschiene 23 gekontert sind. Alternativ hierzu oder zusätzlich könnten beispielsweise auch Halter an der in den Raum weisenden Stirnfläche der Schenkel 15 angreifen, welche andererseits an der Raumdecke befestigt sind. In Fig.1 ist von mehreren solcher Schrauben 22 aus Maßstabsgründen lediglich eine gezeigt. Die Trägerplatte 4 bildet zugleich eine Isolierung zur Decke hin, d.h. dass sie einen Wärmeübergang von der Wärmeleitplatte 10 auf die Decke/Wand bzw. in umgekehrter Richtung behindert, so dass im Falle einer Deckenheizung die Wärme über die Dekorplatte 13 an das Innere das Raumes abgegeben wird.

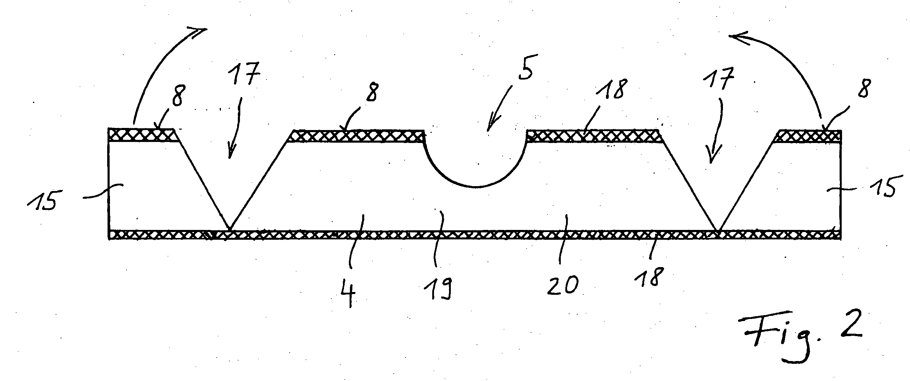

Die Herstellung des Verbundbauelements 1 beinhaltet bevorzugt die folgenden Schritte, welche durch Fig.2 veranschaulicht werden:

Die Trägerplatte 4 wird insbesondere aus einer Platte in Sandwichbauweise, z.B. aus Gipskarton hergestellt, in deren Kontaktfläche 8 die im Querschnitt gesehen im Wesentlichen halbkreisförmige Nut 5 für das Rohr 2 gefertigt wird, beispielsweise durch Fräsen. Dann werden bevorzugt bereits die Aufnahmen, hier die Gewindeeinsätze 21 für die Schrauben 22 bereits in die Trägerplatte 4 eingesetzt (In Fig.2 nicht dargestellt).

Zuvor, danach oder gleichzeitig werden im Querschnitt gesehen etwa dreieckige, symmetrisch zur Mitte angeordnete Einschnitte 17 in der Kontaktfläche 8 der Trägerplatte 4 gefertigt, um dort später die Schenkel 15 der Trägerplatte 4 durch Biegen oder Abkanten herzustellen. Der horizontale Abstand der Mitte der beiden Einschnitte 17 in der Trägerplatte 4 ist dabei so groß wie die Breite der Wärmeleitplatte 10. Dieser Zustand der Trägerplatte 4 ist in Fig.2 gezeigt.

Wie aus Fig.2 hervorgeht, weist die Trägerplatte 4 aus Gipskarton eine typische Schichtung aus zwei außen liegenden Außenschichten 18 aus Karton und einer innen liegenden Innenschicht 19 aus Gips auf. Wenn daher die dreieckförmigen Einschnitte 17 in der Trägerplatte 4 gefertigt sind, ist wegen des dort lokalen Verlusts einer der beiden steiferen Außenschichten 18 aus Karton und dem zusätzlichen Materialverlust an Gips in der Innenschicht 19 die Biegesteifigkeit der Trägerplatte 4 in einer Richtung relativ gering, in welcher die als künftige Schenkel 15 dienenden Randabschnitte gegenüber einem Grundkörper 20 der Trägerplatte 4 nach oben abgeklappt werden, wie durch die Pfeile in Fig. 2 angedeutet ist. Die Randabschnitte bzw. Schenkel 15 der Trägerplatte 4 werden nach dem Fräsen der dreieckförmigen Einschnitte 17 dann im Wesentlichen nur noch durch die eine verbliebene Außenschicht 18 aus Karton am Grundkörper 20 gehalten und können leicht abgebogen werden.

Für die Trägerplatte kann dabei jegliche Platte in Sandwichbauweise verwendet werden, mit einer oder zwei Außenschichten 18 und einer oder mehreren Innenschichten 19. Wesentlich ist dabei nur, dass eine Außenschicht 18 noch eine materielle, biegbare Verbindung zwischen dem Grundkörper 20 und den Schenkeln 15 gewährleistet, wenn die Innenschicht 19 und eine eventuell vorhandene weitere Außenschicht 18 im Bereich der Einschnitte 17 abgetragen sind. Beispielsweise kommt als Trägerplatte 4 auch eine Platte in Sandwichbauweise in Frage, bei welcher die Innenschicht 19 aus Polyurethan-Hartschaum besteht und die Außenschicht 18 oder beide Außenschichten 18 aus einer Kartonage oder einer Folie, insbesondere einer Aluminium- oder Dekorfolie.

In einem weiteren Schritt wird dann die Folie 6 aus Graphitexpandat aufgrund ihrer elastischen Eigenschaften derart in die Nut 5 in der Trägerplatte 4 eingelegt bzw. eingeformt, dass die Folie 6 die Nutoberfläche faltenlos kontaktiert und die Ränder der Folie 6 über den Rand der Nut 5 seitlich hinausragen, einen ebenen und faltenlosen Kontaktabschnitt 7 mit der Wärmeleitplatte 10 ausbilden können. Dabei wird die Folie 6 beidseitig mit Kleber versehen. Sodann wird auch in der Wärmeleitplatte 10 die weitere Nut 9 mit im Wesentlichen halbkreisförmigem Querschnitt beispielsweise durch Fräsen gefertigt.

Dann wird das Rohr 2 in die bereits mit der Folie 6 versehene Nut 5 in der Trägerplatte 4 eingelegt. In einem nächsten Schritt werden die zueinander weisenden Kontaktflächen 8, 11, insbesondere auch die Innenflächen der Schenkel 15 und die Seitenflächen 14 der Wärmeleitplatte 10 sowie der Kontaktabschnitt 7 mit Klebstoff versehen. Vor dem Verkleben der Wärmeleitplatte 10 mit der Trägerplatte 4 können die Schenkel 15 sich noch in ebenem Zustand gemäß Fig.2 befinden oder bereits abgeklappt sein.

Sodann wird die Wärmeleitplatte 10 auf die Trägerplatte 4 aufgelegt, wobei das noch mit seinem Rohrbogen mit im Wesentlichen halbkreisförmigen Querschnitt von der Kontaktfläche 8 aus der Trägerplatte 4 heraus ragende Rohr 2 in der weiteren Nut 9 der Wärmeleitplatte 10 bzw. in deren Nutoberfläche zum Anliegen kommt und zugleich der Kontaktabschnitt 7 der Folie 6 den Kontaktflächen 8, 11 zwischengeordnet wird. Da die Folie 6 relativ dünn ist, kann die Klebstoffschicht auch die Anteile der zueinander weisenden Kontaktflächen 8, 11 erreichen, welche nicht vom Kontaktabschnitt 7 der Folie 6 bedeckt sind. Falls noch nicht geschehen, können dann die Schenkel 15, wie in Fig.2 durch die Pfeile angedeutet, abgeklappt und mit den Seitenflächen 14 der Wärmeleitplatte 10 verklebt werden.

Durch das beschriebene Herstellverfahren ergibt sich wegen des Umgriffs der Schenkel 15 der Trägerplatte 4 in Kombination mit dem dreiflächigen Stoffschluss (Schenkel 15, Grundkörper 20, Schenkel 15) zwischen Trägerplatte 4 und Wärmeplatte 10 ein sehr steifes bzw. eigensteifes bzw. selbsttragendes Verbundelement 1. Weiterhin ist das Herstellverfahren des Verbundelements 1 sehr einfach und auch kostengünstig durchführbar.

### Bezugszeichenliste

- 1: Verbundbauelement
- 2: Rohr
- 4: Trägerplatte
- 5: Nut
- 6: Folie
- 7: Kontaktabschnitt
- 8: Kontaktfläche
- 9: Nut
- 10: Wärmeleitplatte
- 11: Kontaktfläche
- 12: Außenfläche
- 13: Dekorplatte
- 14: Seitenfläche
- 15: Schenkel
- 16: Verbindungsmittel
- 17: Einschnitte
- 18: Außenschicht
- 19: Innenschicht
- 20: Grundkörper
- 21: Gewindeeinsätze
- 22: Schrauben
- 23: Befestigungsschiene

## Patentansprüche

1. Verbundbauelement (1) für eine Fußboden-, Wand- oder Deckenklimatisierungsvorrichtung eines Gebäudes, beinhaltend
a) wenigstens ein zum Durchfluss eines flüssigen Wärmeträgers vorgesehenes Rohr (2),
b) wenigstens eine Platte (4), die aus einem oder mehreren nicht Grahitexpandat enthaltenden Materialien besteht, mit wenigstens einer Nut (5), in welcher wenigstens ein Teil des Querschnitts des wenigstens einen Rohrs (2) aufgenommen ist,
c) eine wärmeleitende, Graphitexpandat beinhaltende Schicht (6), welche wenigstens einen Teil der Rohroberfläche des Rohrs (2) kontaktiert, der Nutoberfläche der Nut (5) der Platte (4) und der Rohroberfläche des Rohrs (2) zwischengeordnet ist, und, senkrecht zur Längserstreckung des Rohrs (2) gesehen, mit wenigstens einem Kontaktabschnitt (7) aus der Nut (5) der Platte (4) herausragt, wobei
d) das Rohr (2) mit dem einen Teil seines Querschnitts in der Nut (5) der Platte (4) und mit einem weiteren Teil seines Querschnitts in einer weiteren Nut (9) wenigstens einer Grahitexpandat enthaltenden Wärmeleitplatte (10) aufgenommen ist, und wobei
e) die wenigstens eine Wärmeleitplatte (10) mit der wenigstens einen Platte (4) verbunden ist, und
f) der wenigstens eine Kontaktabschnitt (7) der Graphitexpandat beinhaltenden, wärmeleitenden Schicht (6) die wenigstens eine Wärmeleitplatte (10) kontaktiert.

2. Verbundbauelement nach Anspruch 1, **dadurch gekennzeichnet, dass** die Nut (5) der Platte (4) und die weitere Nut (9) der Wärmeleitplatte (10) jeweils einen im Wesentlichen halbkreisförmigen Querschnitt aufweisen.

3. Verbundbauelement nach Anspruch 1 oder 2, **dadurch gekennzeichnet, dass** die wärmeleitende Schicht (6) aus Graphitexpandat besteht oder wenigstens eine Graphitexpandat enthaltende Folie aufweist.

4. Verbundbauelement nach Anspruch 3, **dadurch gekennzeichnet, dass** das Graphitexpandat der Folie (6) eine höhere Dichte aufweist als das Graphitexpandat der Wärmeleitplatte (10).

5. Verbundbauelement nach wenigstens einem der vorhergehenden Ansprüche, **dadurch gekennzeichnet, dass** die Wärmeleitplatte (10) mit der Platte (4) unter Zwischenordnung des Kontaktabschnitts (7) der wärmeleitenden Schicht (6) stoffschlüssig verbunden ist.

6. Verbundbauelement nach wenigstens einem der vorhergehenden Ansprüche, **dadurch gekennzeichnet, dass** die Nut (5) der Platte (4) und die weitere Nut (9) der Wärmeleitplatte (10) derartige Dimensionen aufweisen, dass das Rohr (2) mit seiner Rohroberfläche einerseits die wärmeleitende Schicht (6) und andererseits die Nutoberfläche der weiteren Nut (9) der Wärmeleitplatte (10) kontaktiert.

7. Verbundbauelement nach wenigstens einem der vorhergehenden Ansprüche, **dadurch gekennzeichnet, dass** das Material der Platte (4) einen geschäumten Kunststoff wie Polystyrol oder Polyurethan beinhaltet.

8. Verbundbauelement nach wenigstens einem der Ansprüche 1 bis 6, **dadurch gekennzeichnet, dass** die Platte (4) wenigstens eine Platte in Sandwichbauweise beinhaltet.

9. Verbundbauelement nach wenigstens einem der vorhergehenden Ansprüche, **dadurch gekennzeichnet, dass** die Platte (4) die Wärmeleitplatte (10) an deren Seitenflächen (14) umgreift, wobei die Trägerplatte (4) einen U-förmigen Querschnitt mit Schenkeln (15) aufweist und die Schenkel (15) die Seitenflächen (14) der Wärmeleitplatte (10) kontaktieren.

10. Verbundbauelement nach wenigstens einem der vorhergehenden Ansprüche, **dadurch gekennzeichnet, dass** eine von der Platte (4) weg weisende Außenfläche (12) der Wärmeleitplatte (10) mit einem diese Außenfläche (12) kontaktierenden Dekormittel (13) versehen ist.

11. Verbundbauelement nach Anspruch 9 und 10, **dadurch gekennzeichnet, dass** die Enden der Schenkel (15) gegenüber der von der Platte (4) weg weisenden Außenfläche (12) der Wärmeleitplatte (10) ein Stück weit zurück versetzt sind.

12. Verbundbauelement nach wenigstens einem der vorhergehenden Ansprüche, **dadurch gekennzeichnet, dass** die Platte (4) eine höhere Material- und/oder Formsteifigkeit als die Wärmeleitplatte (10) aufweist.

13. Verbundbauelement nach wenigstens einem der vorhergehenden Ansprüche, **dadurch gekennzeichnet, dass** es Verbindungsmittel (16) zur Befestigung an einem Fußboden, einer Wand oder einer Decke eines Gebäudes aufweist.

14. Verbundbauelement nach wenigstens einem der vorhergehenden Ansprüche, **dadurch gekennzeichnet, dass** die Platte (4) eine Trägerplatte für die Wärmeleitplatte (10) darstellt und die wenigstens eine Wärmeleitplatte (10) mit wenigstens einer Trägerplatte (4) zu einem eigensteifen und selbsttragenden Verbundbauelement (1) stoffschlüssig verbunden ist.

15. Fußboden-, Wand- oder Deckenklimatisierungsvorrichtung für ein Gebäude, beinhaltend wenigstens ein Verbundbauelement (1) nach wenigstens einem der vorhergehenden Ansprüche.

## Claims

1. A structural composite element (1) for a floor, wall or ceiling climate control device of a building, comprising
a) at least one tube (2) provided for a flow through of a liquid heat carrier,
b) at least one plate (4) which is made from one or plural materials not including expanded graphite, the plate including at least one groove (5) in which at least a portion of the cross section of the at least one tube (2) is received,
c) a heat conducting layer (6) including expanded graphite, wherein the heat conducting layer contacts at least a portion of a tube surface of the tube (2), wherein the portion is arranged between the groove surface of the groove (5) of the plate (4) and the tube surface of the tube (2), and wherein the layer protrudes with at least one contact section (7) from the groove (5) of the plate (4) viewed perpendicular to a longitudinal extension of the tube (2),
d) wherein the tube (2) is received with a portion of its cross section in the groove (5) of the plate (4) and received with another portion of its cross section in another grove (9) of at least one heat conducting plate (10) including expanded graphite, and
e) wherein the at least one heat conducting plate (10) is connected with the at least one plate (4), and
f) wherein the at least one contact section (7) of the heat conductive layer (6) including the expanded graphite contacts the at least one heat conducting plate (10).

2. The structural composite element according to claim 1, **characterized in** the that the groove (5) of the plate (4) and the additional groove (9) of the heat conducting plate (10) respectively have an essentially semicircular cross section.

3. The structural composite element according to claim 1 or 2, **characterized in that** the heat conducting layer (6) is made from expanded graphite or includes at least one foil including expanded graphite.

4. The structural composite element according to claim 3, **characterized in that** the expanded graphite of the foil (6) has higher density than the expanded graphite of the heat conducting plate (10).

5. The structural composite element according to one of the preceding claims, **characterized in that** the heat conducting plate (10) is bonded together with the plate (4) with the contact section (7) of the heat conducting layer (6) arranged there between.

6. The structural composite element according to at least one of the preceding claims, **characterized in that** the groove (5) of the plate (4) and the additional groove (9) of the heat conducting plate (10) are sized so that the tube (2) with its tube surface contacts on one side the heat conducting layer (6) and on another side the groove surface of the additional groove (9) of the heat conducting plate (10).

7. The structural composite element according to one of preceding claims, **characterized in that** a material of the plate (4) includes a foamed plastic material like polystyrene or polyurethane.

8. The structural composite element according to at least one of the claims 1 through 6, **characterized in that** the plate (4) includes at least one plate in sandwich construction.

9. The structural composite element according to at least one of the preceding claims, **characterized in that** the plate (4) reaches about the heat conducting plate (10) at its lateral surfaces (14), wherein the carrier plate (4) has a U-shaped cross section with arms (15) which contact the sides surfaces (14) of the heat conducting plate (10).

10. The structural composite element according to at least one of the preceding claims, **characterized in that** an outer surface of the heat conducting plate (10) which is oriented away from the plate (4) is provided with a decorative device (13) which contacts the outer surface (12).

11. The structural composite element according to claim 9 and 10, **characterized in that** ends of the arms (15) are recessed relative to the outer surface (12) of the heat conducting plate (10), wherein the outer surface is oriented away from the plate (4).

12. The structural composite element according to at least one of the preceding claims, **characterized in that** the plate (4) has a higher material and/or form stiffness than the heat conducting plate (10).

13. The structural composite element according to at least one of the preceding **characterized in that** the structural composite element includes connecting devices (16) at a floor, a wall or a ceiling of a building.

14. The structural composite element according to at least one of the preceding claims, **characterized in that** the plate (4) is a carrier plate for the heat conducting plate (10) and the at least one heat conducting plate (10) is bonded together with at least one carrier plate (4) to form an intrinsically stiff and self-supporting structural element (1).

15. A floor, wall or ceiling climate control device for a building including at least one structural element (1) according to at least one of the preceding elements.

## Revendications

1. Elément de construction composite (1) pour un dispositif de climatisation des sols, des murs ou des plafonds d'un bâtiment contenant :
a) au moins un tuyau (2) prévu pour l'écoulement d'un caloporteur fluide,
b) au moins une plaque (4) qui est constituée par un ou plusieurs matériaux qui ne contiennent pas de graphite expansé, avec au moins une rainure (5) dans laquelle au moins une partie de la section d'au moins un tuyau (2) est logée,
c) une couche thermoconductrice qui contient du graphite expansé (6) qui est en contact avec au moins une partie de la surface de tuyau du tuyau (2), qui est intercalée entre la surface de rainure de la rainure (5) de la plaque (4) et la surface de tuyau du tuyau (2), qui fait saillie hors de la rainure (5) de la plaque (4) avec au moins une section de contact (7), ceci étant vu perpendiculairement à l'extension en longueur du tuyau (2), cependant que
d) le tuyau (2) est logé avec l'une des parties de sa section dans la rainure (5) de la plaque (4) et avec une autre partie de sa section dans une autre rainure (9) d'au moins une plaque thermoconductrice qui contient du graphite expansé (10), cependant que
e) la plaque thermoconductrice qui existe au moins (10) est reliée à la plaque qui existe au moins (4) et
f) la section de contact qui existe au moins (7) de la couche thermoconductrice qui contient du graphite expansé (6) est en contact avec la plaque thermoconductrice qui existe au moins (10).

2. Elément de construction composite selon la revendication 1, **caractérisé en ce que** la rainure (5) de la plaque (4) et l'autre rainure (9) de la plaque thermoconductrice (10) présentent respectivement une section substantiellement en forme de demi-cercle.

3. Elément de construction composite selon la revendication 1 ou 2, **caractérisé en ce que** la couche thermoconductrice (6) est constituée par du graphite expansé ou présente au moins une feuille qui contient du graphite expansé.

4. Elément de construction composite selon la revendication 3, **caractérisé en ce que** le graphite expansé de la feuille (6) présente une densité supérieure au graphite expansé de la plaque thermoconductrice (10).

5. Elément de construction composite selon au moins l'une des revendications précédentes, **caractérisé en ce que** la plaque thermoconductrice (10) est reliée par liaison de matière à la plaque (4) en intercalant la section de contact (7) de la couche thermoconductrice (6).

6. Elément de construction composite selon au moins l'une des revendications précédentes, **caractérisé en ce que** la rainure (5) de la plaque (4) et l'autre rainure (9) de la plaque thermoconductrice (10) présentent de telles dimensions que le tuyau (2) est en contact avec sa surface de tuyau d'une part avec la couche thermoconductrice (6) et d'autre part avec la surface de rainure de l'autre rainure (9) de la plaque thermoconductrice (10).

7. Elément de construction composite selon au moins l'une des revendications précédentes, **caractérisé en ce que** le matériau de la plaque (4) contient une matière synthétique alvéolaire comme le polystyrène ou le polyuréthane.

8. Elément de construction composite selon au moins l'une des revendications 1 à 6, **caractérisé en ce que** la plaque (4) contient au moins une plaque en sandwich.

9. Elément de construction composite selon au moins l'une des revendications précédentes, **caractérisé en ce que** la plaque (4) recouvre la plaque thermoconductrice (10) sur ses surfaces latérales (14), cependant que la plaque porteuse (4) présente une section en forme d'U avec des montants (15) et les montants (15) ont contact avec les surfaces latérales (14) de la plaque thermoconductrice (10).

10. Elément de construction composite selon au moins l'une des revendications précédentes, **caractérisé en ce qu'**une surface extérieure (12) de la plaque thermoconductrice (10) qui est éloignée de la plaque (4) est pourvue d'un moyen de décoration (13) qui a contact avec cette surface extérieure (12).

11. Elément de construction composite selon les revendications 9 et 10, **caractérisé en ce que** les extrémités des montants (15) sont décalées en arrière d'une partie par rapport à la surface extérieure (12) qui est éloignée de la plaque (4).

12. Elément de construction composite selon au moins l'une des revendications précédentes, **caractérisé en ce que** la plaque (4) présente une plus grande rigidité de matière et/ou de forme que la plaque thermoconductrice (10).

13. Elément de construction composite selon au moins l'une des revendications précédentes, **caractérisé en ce qu'**il présente des moyens d'assemblage (16) pour la fixation à un sol, à un mur ou à un plafond d'un bâtiment.

14. Elément de construction composite selon au moins l'une des revendications précédentes, **caractérisé en ce que** la plaque (4) constitue une plaque porteuse pour la plaque thermoconductrice (10) et la plaque thermoconductrice qui existe au moins (10) est reliée à au moins une plaque porteuse (4) en un élément de construction composite autoporteur et de rigidité intrinsèque (1).

15. Dispositif de climatisation de sols, de murs ou de plafonds pour un bâtiment contenant au moins un élément de construction composite (1) selon au moins l'une des revendications précédentes.
